(19) **Europäisches Patentamt / European Patent Office / Office européen des brevets**

(11) **EP 4 114 084 A1**

(12) **EUROPEAN PATENT APPLICATION**
published in accordance with Art. 153(4) EPC

(43) Date of publication:
**04.01.2023 Bulletin 2023/01**

(21) Application number: **21770482.4**

(22) Date of filing: **08.01.2021**

(51) International Patent Classification (IPC):
***H04W 36/32*** $^{(2009.01)}$

(52) Cooperative Patent Classification (CPC):
**H04W 36/00; H04W 36/30; H04W 36/32**

(86) International application number:
**PCT/CN2021/070850**

(87) International publication number:
**WO 2021/184935 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2020 CN 202010188630**

(71) Applicant: **Huawei Technologies Co., Ltd.**
**Shenzhen, Guangdong 518129, (CN)**

(72) Inventors:
- **LIU, Yan**
  **Shenzhen, Guangdong 518129 (CN)**
- **YE, Jinzhou**
  **Shenzhen, Guangdong 518129 (CN)**

(74) Representative: **Maiwald GmbH**
**Elisenhof**
**Elisenstraße 3**
**80335 München (DE)**

(54) **CELL HANDOVER METHOD AND RELATED DEVICE**

(57) This application relates to communications technologies and discloses a cell handover method and a related device. The cell handover method includes: A terminal obtains a signal attenuation observation instruction, detects, in response to the signal attenuation observation instruction, signal strength and a signal attenuation parameter of a first cell, and sends the signal strength and the signal attenuation parameter to a network side device. Then, the network side device determines, based on the signal strength and the signal attenuation parameter, whether a cell handover is to be performed by the terminal. After performing a cell handover for the terminal is determined, the terminal is triggered to perform the cell handover from the first cell to a second cell. The first cell is a serving cell of the terminal, and the second cell is a neighboring cell of the first cell. It can be learned that according to a technical solution of this application, when determining to perform a cell handover, the network side device may use a signal attenuation degree of the serving cell in which the terminal is located as one of conditions to ensure that the cell handover for the terminal can be performed in time. This ensures successful running of a communication function of the terminal.

FIG. 2

EP 4 114 084 A1

## Description

This application claims priority to Chinese Patent Application No. 202010188630.1, filed with China National Intellectual Property Administration on March 17, 2020 and entitled "CELL HANDOVER METHOD AND RELATED DEVICE", which is incorporated herein by reference in its entirety.

## TECHNICAL FIELD

This application relates to the field of communications technologies, and in particular to a cell handover method and a related device.

## BACKGROUND

An area where a wireless communication service is provided for a mobile terminal is a cell. Wireless signal strength in the cell gradually attenuates from a center of the cell to an edge of the cell. As a result, wireless signal strength at the edge of the cell is relatively weak. The mobile terminal may move with a user from one area to another area. If the mobile terminal moves to the edge of the cell, the mobile terminal may fail to perform successful communication. To maintain successful communication of the mobile terminal, the mobile terminal can send a measurement report to a base station connected to the mobile terminal. The measurement report includes signal strength of the mobile terminal in the cell where the mobile terminal is located (hereinafter referred to as a "local cell"). If the signal strength in the local cell is lower than a preset threshold, the base station may perform a cell handover for the mobile terminal to a neighboring cell of the local cell.

However, if the mobile terminal moves very quickly, for example, at a speed of 150 kilometers per hour (km/h), the signal strength of the mobile terminal in the cell attenuates quickly. In this case, in the measurement report sent by the mobile terminal, the signal strength of the mobile terminal in the cell may not meet handover requirements. However, during the time period from the time when the base station receives the measurement report to the time when the signal strength is detected, the signal strength of the mobile terminal in its location may attenuate to an extent that requires handover. As a result, cell handover may not be prompt, causing problems such as communication interruption of the mobile terminal. It can be learned that an existing cell handover mechanism reduces communication performance of the mobile terminal.

## SUMMARY

The embodiment of this application provides a cell handover method and a related device, to resolve the degraded communications performance of a mobile terminal that uses an existing cell handover mechanism.

According to a first aspect, this application provides a cell handover method. The method includes: A terminal obtains a signal attenuation observation instruction, and the terminal detects, in response to the signal attenuation observation instruction, signal strength and a signal attenuation parameter of a first cell. The signal strength includes signal strength of the first cell which is a serving cell of the terminal, and the signal attenuation parameter indicates a signal attenuation degree in the first cell within a unit time. The terminal sends the signal strength and the signal attenuation parameter to a network side device whose signal coverage includes the first cell and performs a handover, in response to a handover instruction from the network side device, from the first cell to a second cell which is a neighboring cell of the first cell.

The terminal in this application has a wireless communication function, and may not be limited to a network system. The terminal in this application may be, for example, a mobile phone or an internet of vehicles device. A cell is an area unit in signal coverage of a base station. The signal coverage of a base station entity may include multiple cells. Radio signal strength in the cell gradually attenuates from a center of the cell to an edge of the cell.

If the terminal moves very quickly, for example, at a speed of more than 80 kilometers per hour (km/h), the terminal may get the signal attenuation observation instruction. The signal attenuation observation instruction is used to trigger the terminal to measure a signal attenuation degree of a cell where the terminal is located. Therefore, the terminal not only measures the signal strength used to determine whether to perform the cell handover, but also measures the signal attenuation parameter of the first cell. Then, the terminal sends measured signal strength and signal attenuation parameter to the network side device, so that the network side device determines, based on the signal strength and the signal attenuation parameter, whether to perform a cell handover for the terminal. After receiving the handover instruction, the terminal performs a handover from the first cell to the second cell in response. The first cell is a serving cell in which the terminal is currently located. The second cell is the neighboring cell of the first cell. The signal strength measured by the terminal includes the signal strength of the first cell. In some embodiments, the signal strength may further include signal strength of the second cell.

The signal attenuation parameter of the first cell indicates a signal attenuation degree of a signal of the first cell in a unit time. It can be seen that, in this implementation, when movement speed of the terminal is greater than a preset threshold, the terminal not only measures the signal strength of the cell, but also measures a signal attenuation parameter of the serving cell. Then, the network side device determines, based on the signal strength and the signal attenuation parameter of the serving cell of the terminal, whether the cell handover is to be performed by the terminal. In this way, in a process of determining whether to perform a cell handover for the terminal, the network side device can use signal attenuation caused by the movement speed of the terminal as one of parameters, so that the cell handover for the terminal can be performed accurately and in time. This ensures successful running of a communication function of the terminal.

In a possible design, that a terminal obtains a signal attenuation observation instruction includes: The terminal obtains movement information of the terminal, and the movement information includes a movement speed and a movement direction of the terminal. If the movement speed is greater than a preset threshold, the terminal generates the signal attenuation observation instruction. The preset threshold is a preset movement speed threshold of the terminal, and if the movement speed of the terminal is greater than the preset threshold, the terminal obtains the signal attenuation observation instruction. In some embodiments, the preset threshold may be maintained by the terminal. In this embodiment, after the terminal obtains the movement information of the terminal, the terminal may determine, according to the movement information and the preset threshold, whether to start the signal attenuation observation instruction. In this way, in a scenario in which the movement speed of the terminal is relatively high, the terminal can be triggered to detect a signal strength attenuation degree generated by the moving speed of the terminal, so as to provide a parameter basis for cell handover of the terminal.

In a possible design, that a terminal obtains a signal attenuation observation instruction includes: The terminal obtains movement information of the terminal, and the movement information includes a movement speed and a movement direction of the terminal. The terminal sends the movement information to the network side device and receives the signal attenuation observation instruction from the network side device. The signal attenuation observation instruction is generated by the network side device in response to the movement information. In some embodiments, the preset threshold is maintained by the network side device. Correspondingly, after obtaining the movement information of the terminal, the terminal sends the movement information to the network side device. If the movement speed is greater than the preset threshold, the terminal may receive the signal attenuation observation instruction from the network side device. In this implementation, in a scenario in which the movement speed of the terminal is relatively high, the terminal can be triggered to detect a signal strength attenuation degree generated by the moving speed of the terminal, so as to provide a parameter basis for cell handover of the terminal.

The network side device includes a base station and a core network system. Further:

In a possible design, the preset threshold is maintained by the base station. After obtaining the movement information of the terminal, the terminal sends the movement information to the base station. The terminal receives the signal attenuation observation instruction from the base station. The signal attenuation observation instruction is generated by the base station in response to the movement information. For example, the signal attenuation observation instruction may be included in a measurement control message.

In a possible design, the preset threshold is maintained by the core network system. After obtaining the movement information of the terminal, the terminal sends the movement information to a core network element. The terminal receives the signal attenuation observation instruction from the core network element. The signal attenuation observation instruction is generated by the core network element in response to the movement information. For example, the core network element may be an application server (application server, AS) network element. The terminal may send the movement information to the AS network element by using a co-operative awareness message (co-operative awareness message, CAM). The terminal may further receive the signal attenuation observation instruction through a response (response) message.

In a possible design, that the terminal detects, in response to the signal attenuation observation instruction, signal strength and a signal attenuation parameter of a first cell includes: The terminal reads a speed threshold from the signal attenuation observation instruction, determines whether the movement speed of the terminal reaches the speed threshold, and detects the signal attenuation parameter of the first cell if the movement speed of the terminal reaches the speed threshold.

The movement speed and movement direction of the terminal are variable. For example, the movement speed of the terminal may decrease. And for another example, the movement direction of the terminal may be 180 degrees in a reverse direction. The change of the movement speed and movement direction of the terminal is closely related to whether the cell signal is attenuated. After the movement speed of the terminal decreases, the signal strength of the cell attenuates. After the movement direction of the terminal changes to 180 degrees in a reverse direction, the signal strength of the cell may gradually increase. Therefore, triggering the terminal to measure the signal attenuation parameter based on only a movement speed of the terminal at one time point may cause a waste of measurement resources.

Based on this, in some embodiments, the signal attenuation observation instruction includes the speed threshold, which can be greater than the preset threshold. The terminal may detect the signal attenuation parameter of the first cell when the current movement speed of the terminal reaches the speed threshold. This saves measurement resources.

In a possible design, that the terminal detects, in response to the signal attenuation observation instruction, signal strength and a signal attenuation parameter of a first cell includes: The terminal reads a signal strength threshold from the signal attenuation observation instruction, determines whether the signal strength is less than or equal to the signal strength threshold, and detects the signal attenuation parameter of the first cell if the signal strength of the first cell is less than or equal to the signal strength threshold.

In some embodiments, although the movement speed and movement direction of the terminal remain unchanged, the terminal may move from an edge of a cell to a relative edge of the edge. In this case, the terminal may need to pass through a central area of the cell. In this scenario, within a period of time after the terminal starts to move, the signal strength detected by the terminal gradually increases, and then the signal strength detected by the terminal gradually attenuates. Detecting the signal attenuation parameter when the signal strength gradually increases is meaningless and wastes resources.

Based on this, in some embodiments, the signal attenuation observation instruction may include the signal strength threshold. The terminal may detect the signal attenuation parameter of the first cell when the signal strength of the first cell is less than or equal to the signal strength threshold. This saves measurement resources.

In a possible design, that the terminal detects, in response to the signal attenuation observation instruction, signal strength and a signal attenuation parameter of a first cell includes: The terminal reads the speed threshold and the signal strength threshold from the signal attenuation observation instruction and determines whether the movement speed of the terminal reaches the speed threshold. If the movement speed of the terminal reaches the speed threshold, the terminal detects the signal attenuation parameter of the first cell. If the movement speed of the terminal does not reach the speed threshold, the terminal determines whether the signal strength of the first cell is less than or equal to the signal strength threshold and detects the signal attenuation parameter of the first cell if the signal strength of the first cell is less than or equal to the signal strength threshold. In this implementation, after receiving the signal attenuation observation instruction, the terminal first determines at least one of the movement speed and the signal strength of the terminal, so as to determine whether the current signal strength is attenuating. If the current signal strength is attenuating, the terminal starts to measure the signal attenuation parameter of the cell. In this way, the signal attenuation parameter of the cell can be accurately measured, and resources can be saved.

In a possible design, the signal attenuation parameter may satisfy: Signal attenuation parameter = $\frac{df(t)}{dt}$, and $f(t)$ refers to signal strength of the first cell at a moment t. In some embodiments, the terminal may calculate a change degree of signal strength within a period of time (for example, 10 milliseconds (ms)), and use the change degree as the signal attenuation parameter.

According to a second aspect, this application provides a cell handover method. The method includes: A network side device receives signal strength and a signal attenuation parameter of a first cell from a terminal. The signal strength includes signal strength of the first cell, the signal attenuation parameter indicates a signal attenuation degree in the first cell within a unit time, and the first cell is a serving cell of the terminal and is located in a signal coverage area of the network side device. The network side device determines whether a cell handover is to be performed by the terminal based on the signal strength and the signal attenuation parameter and sends a handover instruction to the terminal after determining that the cell handover is to be performed by the terminal based on the signal strength and the signal attenuation parameter.

The network side device is used to provide a wireless communication function for the terminal. In this application, the network side device includes a base station and a core network of various forms. The base station is used to connect the terminal to a core network, so that the terminal accesses a network. The base station transmits different carrier waves by using an antenna, and an application range of each carrier wave is a cell.

In some embodiments, the network side device may receive the signal strength and the signal attenuation parameter of the first cell from the terminal. Then, the network side device determines whether that the cell handover is to be performed by the terminal based on the signal strength and the signal attenuation parameter and sends the handover instruction to the terminal after determining that the cell handover is to be performed by the terminal, so that the terminal may perform a cell handover. The signal strength, the first cell, and the signal attenuation parameter are described in the first aspect. For example, in this embodiment, the network side device may be implemented as a base station. The signal strength and the signal attenuation parameter of the first cell may be included in a measurement report.

It can be seen that, in this implementation, the base station determines, based on the signal strength of the cell and the signal attenuation parameter of the cell, whether that the cell handover is to be performed by the terminal, to ensure that the cell handover for the terminal can be performed in time. This ensures successful running of a communication function of the terminal.

In a possible design, that the network side device determines whether the cell handover is to be performed by the terminal based on the signal strength and the signal attenuation parameter includes: The network side device decides whether the signal strength reaches a handover threshold. If the signal strength reaches the handover threshold, the network side device determines that the cell handover is to be performed by the terminal. If the signal strength does not reach the handover threshold, the network side device determines whether the signal attenuation parameter is greater than or equal to an attenuation threshold and determines that the cell handover is to be performed by the terminal if the signal attenuation parameter is greater than or equal to the attenuation threshold.

In this embodiment, the network side device may be implemented as a base station. The handover threshold is related to a handover event reported by the terminal. For the handover event, refer to a definition in a related protocol. When the terminal moves at a relatively high speed, signal attenuation of a cell in which the terminal is located may also be relatively fast. The signal strength reported by the terminal may not meet the handover condition, but the signal strength of the area where the terminal is located may have been attenuated to an extent that the handover is required during the time period when the base station determines whether to the cell handover is to be performed. Based on this, the base station can decide whether the signal strength reaches the handover threshold. If the signal strength reaches the handover threshold, the base station determines that the cell handover is to be performed by the terminal. If the signal strength does not reach the handover threshold, the base station determines whether the signal attenuation parameter is greater than or equal to the attenuation threshold and determines that the cell handover is to be performed by the terminal if the signal attenuation parameter is greater than or equal to the attenuation threshold. In this way, the cell of the terminal can be handed over in time and this ensures successful running of a communication function of the terminal.

In a possible design, before the network side device receives the signal strength and the signal attenuation parameter of the first cell from the terminal: The network side device receives movement information from the terminal, and the movement information includes a movement speed and a movement direction of the terminal. If the movement speed is greater than a preset threshold, the network side device sends a signal attenuation observation instruction to the terminal.

In a possible design, when the base station maintains the preset threshold, the base station receives the movement information of the terminal from the terminal. After determining that the movement speed of the terminal is greater than the preset threshold, the base station sends the signal attenuation observation instruction to the terminal.

In a possible design, when the core network element maintains the preset threshold, the core network element receives the movement information of the terminal from the terminal. After determining that the movement speed of the terminal is greater than the preset threshold, the core network element sends the signal attenuation observation instruction to the terminal.

This embodiment corresponds to the embodiment in which the preset threshold is set at the network side device end in the first aspect. Details are not described herein again.

In a possible design, the signal attenuation observation instruction includes at least one of a speed threshold and a signal strength threshold.

According to a third aspect, this application provides a terminal which has a function of implementing behavior of the terminal in the foregoing method. The function may be implemented by hardware, or may be implemented by hardware executing corresponding software. The hardware or the software includes one or more modules corresponding to the foregoing function. In a possible design, a structure of the terminal includes a processor and a transceiver. The processor is configured to provide a corresponding function for the terminal in the foregoing method. The transceiver is configured to implement communication between the terminal and the network side device. The terminal may further include a memory. The memory is configured to be coupled to the processor, and the memory stores program instructions and data that are necessary for the electronic device.

According to a fourth aspect, this application provides a network side device which has a function of implementing behavior of the network side device in the foregoing method. The function may be implemented by hardware, or may be implemented by hardware executing corresponding software. The hardware or the software includes one or more modules corresponding to the foregoing function. In a possible design, a structure of the network side device includes a processor and a transceiver. The processor is configured to enable the network side device to perform a corresponding function in the foregoing method. The transceiver is configured to implement communication between the network side device and the terminal. The network side device may further include a memory. The memory is configured to be coupled to the processor, and the memory stores program instructions and data that are necessary for the network side device. In a possible design, the network side device may be implemented as a base station. In a possible design, the network side device may be implemented as a core network and a base station.

According to a fifth aspect, this application further provides a chip system. The chip system is disposed in a terminal in the third aspect and includes at least one processor and an interface. The interface is coupled to the processor and is configured to receive code instructions and transmit the code instructions to the at least one processor. The at least one processor runs the code instructions and implements some or all steps of cell handover method in the first aspect and possible implementations of the first aspect.

According to a sixth aspect, this application further provides a chip system. The chip system is disposed in the network side device in the fourth aspect and includes at least one processor and an interface. The interface is coupled to the processor and is configured to receive code instructions and transmit the code instructions to the at least one processor. The at least one processor runs the code instructions and implements some or all steps of cell handover method in the second aspect and possible implementations of the second aspect.

According to a seventh aspect, this application provides a computer storage medium. The computer storage medium stores instructions. When the instructions are run on a computer, the computer is enabled to perform some or all steps of the cell handover method in the first aspect, the second aspect, the possible implementations of the first aspect, and the possible implementations of the second aspect.

According to an eighth aspect, this application provides a computer program product. When the computer program product runs on a computer, the computer is enabled to perform some or all steps of the cell handover method in the first aspect, the second aspect, the possible implementations of the first aspect, and the possible implementations of the second aspect.

According to a ninth aspect, this application provides a terminal that includes a processor and a memory, where, the processor is coupled to the memory, the memory stores program code, and the processor invokes and executes the program code in the memory, so that the terminal performs the method according to the first aspect.

According to a tenth aspect, this application provides a network side device that includes a processor and a memory, where,

the processor is coupled to the memory, the memory stores program code, and the processor invokes and executes the program code in the memory, so that the terminal performs the method according to the second aspect.

To resolve problems in the current technology, in a technical solution of this application, when the movement speed of the terminal is greater than the preset threshold, the terminal not only measures the signal strength of the cell, but also measures the signal attenuation parameter of the serving cell. After this, the terminal reports the measured signal strength and signal attenuation parameter to the network side device. Then, the network side device determines, based on the signal strength and the signal attenuation parameter of the serving cell of the terminal, whether the cell handover is to be performed by the terminal. In this way, in a process of determining whether to perform the cell handover for the terminal, the network side device can use signal attenuation caused by the movement speed of the terminal as one of parameters, so that the cell handover for the terminal can be performed accurately and in time. This ensures successful running of a communication function of the terminal.

## BRIEF DESCRIPTION OF DRAWINGS

FIG. 1 is a schematic structural diagram of a network architecture 10 according to this application;
FIG. 2 is a signaling interaction diagram of a cell handover method 100 according to this application;
FIG. 3A is a schematic diagram of a first example implementation scenario for terminal movement according to this application;
FIG. 3B is a schematic diagram of a second example implementation scenario for terminal movement according to this application;
FIG. 4 is a schematic diagram of an example of a signal attenuation degree according to this application;
FIG. 5 is a schematic diagram of an example scenario triggering a cell handover according to this application;
FIG. 6 is a schematic structural diagram of a network architecture 20 according to this application;
FIG. 7A is a signaling interaction diagram of a cell handover method 200 according to this application;
FIG. 7B is a signaling interaction diagram of a cell handover method 300 according to this application;
FIG. 7C is a signaling interaction diagram of a cell handover method 400 according to this application;
FIG. 8A is a schematic structural diagram of a physical apparatus 80 according to this application; and
FIG. 8B is a schematic structural diagram of a chip system 81 according to this application.

## DESCRIPTION OF EMBODIMENTS

The following clearly describes a technical solution in this application with reference to accompanying drawings in this application.

Terms used in the following embodiments of this application are only intended to describe specific embodiments, and are not intended to limit this application. Terms "one", "a", "the", "the foregoing", "this", and "the one" of singular forms used in this specification and the appended claims of this application are also intended to include plural forms, unless otherwise specified in the context clearly. It should also be understood that although the terms first, second, and the like may be used to describe a class of objects in the following embodiments, the objects should not be limited to these terms. The terms are merely used to distinguish between specific objects of this class of objects. For example, in the following embodiments, terms such as first and second may be used to describe cells, but the cells should not be limited to these terms. The terms are merely used to distinguish different cells. The same applies to other classes of objects that may be described by using the terms first, second, and the like in the following embodiments, and details are not described herein again.

The following describes an implementation scenario of this application by using an example.

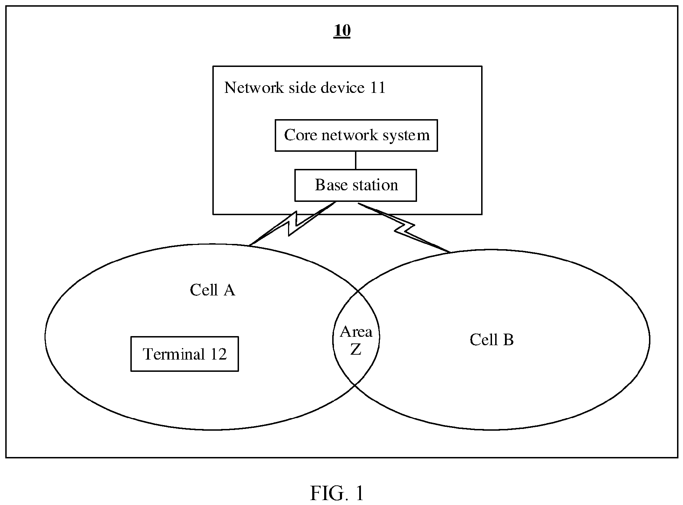

FIG. 1 shows a network architecture 10. The network architecture 10 relates to a network side device 11 and a terminal 12. A signal coverage area of the network side device 11 includes a cell A and a cell B. The cell A is adjacent to the cell B, and some areas of the cell A and the cell B overlap to form an area Z. Currently, the terminal 12 is located in the cell A, that is, currently the cell A is a serving cell of the terminal 12. The terminal 12 may move with a user. For example, the terminal 12 moves from the cell A to the cell B. After the terminal 12 moves to the area Z, the network side device 11 may hand over the serving cell of the terminal 12 from the cell A to the cell B.

The network side device 11 in this application is configured to provide a wireless communication function for the terminal 12. The network side device 11 may include a base station and a core network (core network, CN) of various forms. The base station is used to connect the terminal 12 and the core network, so that the terminal 12 accesses a network. The base station in this application includes, for example, a macro base station, a micro base station (also referred to as a small cell), a relay station, and an access point. In systems using different radio access technologies, a device having a function of a base station may have different names. For example, the device is referred to as an evolved NodeB (evolved NodeB, eNB or eNodeB) in a long term evolution LTE (Long Term Evolution, LTE) system, and is referred to as a NodeB (NodeB) in a third generation (3rd generation, 3G) system. In a next-generation system, the device is referred to as a gNB (gNodeB). The core network in this application may include, for example, an application server (application server, AS) access and mobility management function (access and mobility management function, AMF) network element, a session management function (session management function, SMF) network element, and a unified data management (unified data management, UDM) network element.

Both the base station and the core network shown in this application are definitions at a logical function layer. In an actual implementation, the network architecture 10 may include at least one base station device entity and at least one core network system. When the network architecture 10 includes at least two base station device entities, the at least two base station device entities may access a same core network system, or may separately access different core network systems. This is not limited here.

The terminal 12 in this application is not limited to a network system and includes a mobile phone, an internet of vehicles device, an internet of things device, and the like. The terminal may also be referred to as user equipment (user equipment, UE), a mobile station (mobile station), a mobile (mobile), a remote station (remote station), a remote terminal (remote terminal), an access terminal (access terminal), a user terminal (user terminal), or a user agent (user agent). This is not limited here. The terminal 12 may perform wireless communication with the base station or with the core network, or forward information between the terminal 12 and the core network by using the base station.

A "cell" in this application is an area unit in signal coverage of a base station. The base station implements wireless coverage by using an antenna of the base station. The antenna may transmit different carrier waves, and an application range of each carrier wave is a "cell". The signal coverage of the base station entity may include multiple cells. Based on this, the cell A and the cell B shown in FIG. 1 may be two cells in signal coverage of a same base station entity, or two cells in respective signal coverage of two base station entities.

In addition, embodiments of this application are also applicable to another future-oriented communication technology. Network architectures and service scenarios described in this application are intended to describe the technical solution in this application more clearly, and do not constitute a limitation on the technical solution provided in this application. A person of ordinary skill in the art may know that: With evolution of network architectures and emergence of new service scenarios, the technical solution provided in this application is further applicable to similar technical problems.

In an existing cell handover method, a network side device uses only signal strength of a serving cell reported by a terminal as a handover condition. If the terminal moves quickly, the signal strength of the serving cell attenuates quickly. In this case, even if the signal strength reported by the terminal does not meet the handover condition, signal strength of an area to which the terminal actually moves may already meet the handover condition. As a result, cell handover may not be performed in time, and problems such as terminal communication interruption and communication information loss may occur.

Based on this, this application provides a cell handover method and a related device. In this application, if a movement speed of a terminal is greater than a preset threshold, the terminal reports, to a network side device, signal strength and a signal attenuation parameter of a serving cell in which the terminal is located. The signal attenuation parameter indicates a signal attenuation degree of the serving cell within a unit time. Then, the network side device may perform the cell handover for the terminal when the signal strength reaches the handover condition or the signal attenuation parameter is greater than or equal to an attenuation threshold. It can be seen that, in this implementation, when determining a cell handover, the network side device may use the signal attenuation degree of the serving cell in which the terminal is located as one of conditions to ensure that the cell handover for the terminal can be performed in time. This ensures successful running of a communication function of the terminal.

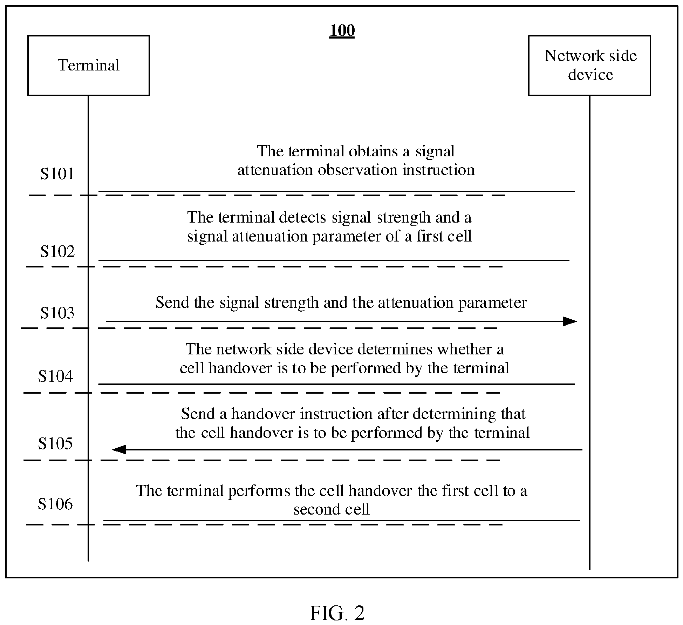

For example, with reference to the network architecture 10, this application provides an embodiment of a cell handover method. As shown in FIG. 2, a cell handover method 100 (briefly referred to as a method 100 below) provided in this application includes the following steps.

S101: A terminal obtains a signal attenuation observation instruction.

The signal attenuation observation instruction is used to trigger the terminal to measure a signal attenuation degree of a cell where the terminal is located. The signal attenuation observation instruction may include at least one of a speed threshold and a signal strength threshold.

In actual implementation, if the terminal moves quickly, the signal strength of the terminal in the cell attenuates quickly. Based on this, to perform a cell handover for the terminal in time, in this application, if a movement speed of a terminal is greater than the preset threshold, the terminal obtains a signal attenuation observation instruction to start measuring the signal attenuation degree of the cell. A measurement unit of the preset threshold may be kilometer per hour (km/h). And the preset threshold may be flexibly set based on an implementation scenario. For example, the preset threshold can be 80 km/h

In some embodiments, the preset threshold may be maintained by the terminal. In some other embodiments, the preset threshold may be maintained by a network side device. Correspondingly, in the foregoing different embodiments, the terminal may obtain the signal attenuation observation instruction at least by using the following embodiments.

Embodiment 1: If a preset threshold is maintained by a terminal, the terminal obtains movement information of the terminal, where the movement information includes a movement speed and a movement direction of the terminal, and if the movement speed is greater than the preset threshold, the terminal generates a signal attenuation observation instruction.

Embodiment 2: If a preset threshold is maintained by a network side device, after obtaining movement information of the terminal, the terminal sends the movement information to the network side device. Then, the network side device determines whether a movement speed is greater than the preset threshold. After determining that the movement speed is greater than the preset threshold, the network side device generates a signal attenuation observation instruction, and then sends the signal attenuation observation instruction to the terminal.

It can be learned from the foregoing description of the network side device that the network side device includes a base station and a core network system. The preset threshold may be maintained by the base station or the core network system. Correspondingly, the foregoing Embodiment 2 may include the following implementations.

Implementation 1: If a preset threshold is maintained by a base station, after obtaining movement information of a terminal, the terminal sends the movement information to the base station. Then, after determining that a movement speed is greater than a preset threshold, the base station generates a signal attenuation observation instruction, and then sends the signal attenuation observation instruction to the terminal.

In actual implementation, after being attached to the base station, the terminal may receive a measurement control message from the base station. The measurement control message is used to trigger the terminal to measure signal strength of the terminal in a cell (for example, the cell A in FIG. 1). Based on this, for example, after being attached to the base station, the terminal may send the movement information of the terminal to the base station. After determining that the movement speed is greater than the preset threshold, the base station sends a measurement control message to the terminal, where the measurement control message may include a signal attenuation observation instruction. The measurement control message may be, for example, a radio resource control reconfiguration (radio resource control reconfiguration, RRCReconfiguration) message.

It may be understood that the foregoing implementation 1 is merely an example for description, and constitutes no limitation on the technical solution of this application. In some other embodiments, information exchanged between the base station and the terminal may be other information and information including the signal attenuation observation instruction is not limited to a measurement control message. Details are not described herein again.

Implementation 2: If a preset threshold is maintained by a core network system, using an LTE system as an example, a terminal may send a co-operative awareness message (co-operative awareness message, CAM) to an AS network element in the LTE system, where the CAM includes movement information of the terminal. After determining that a movement speed is greater than a preset threshold, the AS network element sends a response (response) message to the terminal, where the response message includes a signal attenuation observation instruction.

It may be understood that the foregoing implementation 2 is merely an example for description, and constitutes no limitation on the technical solution of this application. In some other embodiments, the core network system may be a network system of other types, the network element that generates and sends the signal attenuation observation instruction in the core network system may also be another network element, and the message sent by the terminal to the network element is also not limited to the CAM. Details are not described herein again.

S102: The terminal detects, in response to the signal attenuation observation instruction, signal strength and a signal attenuation parameter of a first cell.

The signal strength includes signal strength of the first cell. In some embodiments, the signal strength may further include signal strength of a second cell. The first cell is a serving cell of the terminal, for example, the cell A in FIG. 1. The second cell may be a neighboring cell of the first cell, for example, the cell B shown in FIG. 1. The signal attenuation parameter indicates a signal attenuation degree of a signal of the first cell in a unit time.

For example, the terminal may determine the signal strength by, for example, detecting carrier wave power. Details are not described herein.

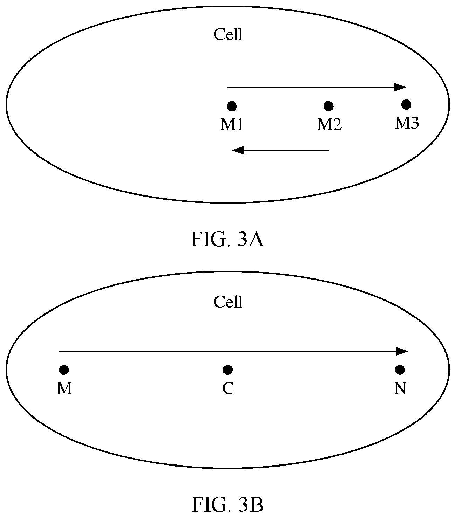

It may be understood that, although in S101 the terminal measures the signal attenuation parameter only based on a movement speed of the terminal at a time point, in actual implementation, movement speed and movement direction of the terminal are variable. If the movement speed of the terminal decreases, signal attenuation of the terminal in the cell slows down, and the signal attenuation parameter may not need to be measured. The movement direction of the terminal is associated with whether cell signal is attenuated. As shown in FIG. 3A, if the terminal continuously moves from a location M1 of the cell to a location M2 and then to a location M3, signal strength of the terminal in the cell gradually attenuates. If the terminal moves reversely from the location M2 to the location M1 after moving from the location M1 of the cell to the location M2, signal strength of the terminal in the cell gradually increases after the terminal changes a movement direction.

Based on this, to save measurement resources, in some embodiments, the signal attenuation observation instruction includes a speed threshold. In this embodiment, the terminal may read the speed threshold from the signal attenuation observation instruction, and then determine whether a current movement speed of the terminal reaches the speed threshold. If the current movement speed of the terminal reaches the speed threshold, the terminal detects the signal attenuation parameter of the first cell. If the current movement speed of the terminal does not reach the speed threshold, the terminal does not perform the operation of measuring the signal attenuation parameter. The speed threshold may be greater than the preset threshold. For example, the speed threshold can be 120 km/h

It should be noted that, in this embodiment, the terminal may use movement direction in movement information obtained for the first time as a reference. If the included angle between a current movement direction of the terminal and the movement direction obtained for the first time is less than or equal to 90 degrees, the movement speed is determined as a positive value. If the included angle between a current movement direction and the movement direction obtained for the first time is greater than 90 degrees, the movement speed is determined as a negative value.

In some other scenarios, as shown in FIG. 3B, the terminal moves, for example, from a location M of the cell to a location C and then to a location N. The location C in this example is located in a central area of the cell. In this scenario, although a movement speed and a movement direction of the terminal remain unchanged, signal strength of the terminal in the cell gradually increases when the terminal moves from the location M to the location C and gradually attenuates when the terminal moves from the location C to the location N. In this case, when the terminal moves from the location M to the location C, it is meaningless for the terminal to calculate the signal attenuation parameter in the cell and this wastes resources.

Based on this, in some other embodiments, the signal attenuation observation instruction may include a signal strength threshold. In this embodiment, the terminal may read the signal strength threshold from the signal attenuation observation instruction, and then determine whether the signal strength of the first cell is less than or equal to the signal strength threshold. If the signal strength of the first cell is less than or equal to the signal strength threshold, the terminal detects the signal attenuation parameter of the first cell. If the signal strength of the first cell is greater than the signal strength threshold, the terminal does not perform an operation of measuring the signal attenuation parameter. The signal strength threshold may be greater than -90 decibels per milliwatt (dBm), for example, -70 dBm.

In some other embodiments, the signal attenuation observation instruction may include a speed threshold and a signal strength threshold. In this embodiment, the terminal may read the speed threshold and the signal strength threshold from the signal attenuation observation instruction. Then, the terminal determines whether a movement speed of the terminal reaches the speed threshold. If the movement speed of the terminal reaches the speed threshold, the terminal detects the signal attenuation parameter of the first cell. If the movement speed of the terminal does not reach the speed threshold, the terminal may determine whether signal strength of the first cell is less than or equal to the signal strength threshold. If the signal strength of the first cell is less than or equal to the signal strength threshold, the terminal can detect the signal attenuation parameter of the first cell. If the signal strength of the first cell is greater than the signal strength threshold, the terminal does not perform an operation of measuring the signal attenuation parameter. The speed threshold and the signal strength threshold are described in the foregoing embodiment, and details are not described herein again.

It can be seen that, in this implementation, after receiving the signal attenuation observation instruction, the terminal first determines at least one of the movement speed and the signal strength of the terminal, so as to determine whether current signal strength is attenuating. If the current signal strength is attenuating, the terminal starts to measure the signal attenuation parameter of the cell. In this way, the signal attenuation parameter of the cell can be accurately measured, and resources can be saved.

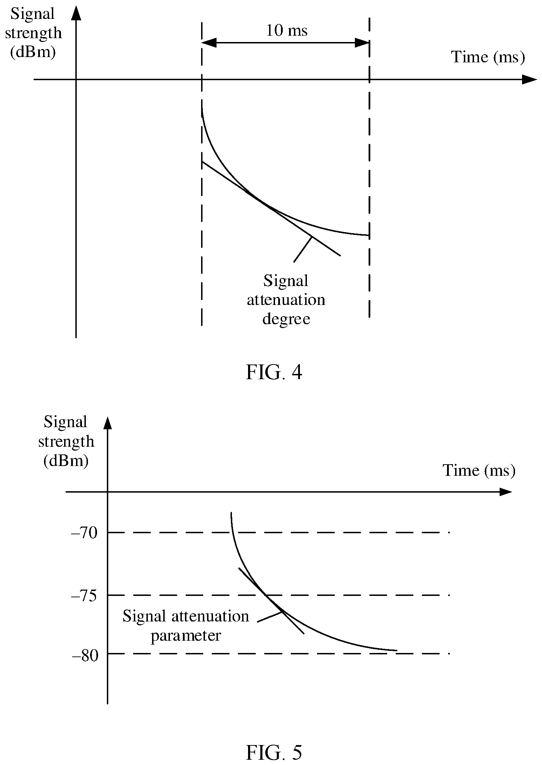

As shown in FIG. 4, in some embodiments, the terminal may calculate a change degree of signal strength within a period of time (for example, 10 milliseconds (ms)), and use the change degree as a signal attenuation parameter. For example, the signal attenuation parameter may satisfy Signal attenuation $\text{parameter} = \frac{\mathrm{d}f(t)}{\mathrm{d}t}$, and f(*t*) refers to signal strength of the first cell at a moment t.

It may be understood that the foregoing method for determining a signal attenuation parameter is merely an example for description, and constitutes no limitation on the technical solution of this application. In some other embodiments, the terminal may alternatively determine the signal attenuation parameter by using another method or algorithm. Details are not described herein again.

S103: The terminal sends the signal strength and the signal attenuation parameter to a network side device.

In this step, the network side device is, for example, a base station.

With reference to the embodiment of S101, the terminal may send, in response to the measurement control message from the base station, a measurement report to the base station, where the measurement report may include the signal strength and the signal attenuation parameter. The measurement report may be, for example, a radio resource control reconfiguration complete (RRCReconfiguration complete, RRCReconfigurationCmp) message.

S104: The network side device determines, based on the signal strength and the signal attenuation parameter, whether the cell handover is to be performed by the terminal.

In this step, the network side device is, for example, a base station.

For example, the base station can decide whether the signal strength reaches a handover threshold. If the signal strength reaches the handover threshold, the base station determines that the cell handover is to be performed by the terminal. If the signal strength does not reach the handover threshold, the base station determines whether the signal attenuation parameter is greater than or equal to an attenuation threshold and determines that the cell handover is to be performed by the terminal if the signal attenuation parameter is greater than or equal to the attenuation threshold. The handover threshold is related to a handover event reported by the terminal. For an embodiment of the handover event, refer to the following description. The attenuation threshold may be, for example, 15 decibels (dB).

The handover threshold for the signal strength can be -80 dBm for example. As shown in FIG. 5, when the signal strength is -75 dBm which is greater than -80 dBm, the handover threshold is not meet. If the signal attenuation parameter is greater than the attenuation threshold 15 dB, that is, the signal attenuates quickly, the signal strength may be attenuated to -85 dBm at a next moment when the current signal strength is -75 dBm. Based on this, the base station determines that the cell handover is to be performed by the terminal.

It can be seen that, in this implementation, the base station determines, based on the signal strength of the cell and the signal attenuation parameter of the cell, whether the cell handover is to be performed by the terminal, to ensure that the cell handover for the terminal can be performed in time. This ensures successful running of a communication function of the terminal.

In actual implementation, the terminal may report the handover event and the signal attenuation parameter of the first cell. The handover event meets a definition of network handover in a communications protocol. Table 1 describes handover events.

**Table 1**

| Handover Event | Event Description |
| --- | --- |
| A1 | If a signal strength of a first cell is greater than a first threshold, no cell handover is performed. |
| A2 | If the signal strength of the first cell is less than a second threshold, the first cell is handed over to a second cell |
| A3 | If signal strength of a second cell is greater than the signal strength of the first cell and reaches a third threshold, the first cell is handed over to the second cell. |
| A4 | If the signal strength of the second cell is greater than a fourth threshold, the first cell is handed over to the second cell. |
| A5 | If the signal strength of the first cell is less than a fifth threshold and the signal strength of the second cell is greater than a sixth threshold, the first cell is handed over to the second cell. |
| B1 | If the second cell and the first cell belong to different systems and the signal strength of the second cell is greater than a seventh threshold, the first cell is handed over to the second cell. |

(continued)

| Handover Event | Event Description |
|---|---|
| B2 | If the second cell and the first cell belong to different systems, the signal strength of the first cell is less than an eighth threshold, and the signal strength of the second cell is greater than a ninth threshold, the first cell is handed over to the second cell. |

For the thresholds in Table 1, refer to stipulations in a related protocol. Details are not described herein. After receiving the measurement control message, the terminal may choose a reported handover event, measure signal strength of a cell involved in the handover event, and then generate a related event. Details are not described herein again.

S105: After determining that the cell handover is to be performed by the terminal based on the signal strength and the signal attenuation parameter, the network side device sends a handover instruction to the terminal.

In this step, the network side device is, for example, a base station.

In some embodiments, the second cell and the first cell belong to a signal coverage area of a same base station. In this embodiment, the handover instruction may include information such as a target port number of the second cell. In some other embodiments, the second cell and the first cell belong to signal coverage areas of different base stations. In this embodiment, the handover instruction may include information such as a target base station identifier and a target port number of the second cell.

S106: The terminal performs the handover, in response to the handover instruction from the network side device, from the first cell to the second cell.

In conclusion, according to the cell handover method in this application, when the movement speed of the terminal is greater than the preset threshold, the terminal not only measures the signal strength of the cell, but also measures the signal attenuation parameter of the serving cell. After this, the terminal reports the measured signal strength and signal attenuation parameter to the network side device. Then, the network side device determines, based on the signal strength and the signal attenuation parameter of the serving cell of the terminal, whether the cell handover is to be performed by the terminal. In this way, in a process of determining whether to perform the cell handover for the terminal, the network side device can use signal attenuation caused by the movement speed of the terminal as one of parameters, so that the cell handover for the terminal can be performed accurately and in time. This ensures successful running of a communication function of the terminal.

The following describes this solution by using an example with reference to an implementation scenario.

For example, the following embodiments describe the technical solution of this application by using an LTE network architecture as an example. A technical term appearing in the following embodiments may be a term of an LTE communications technology.

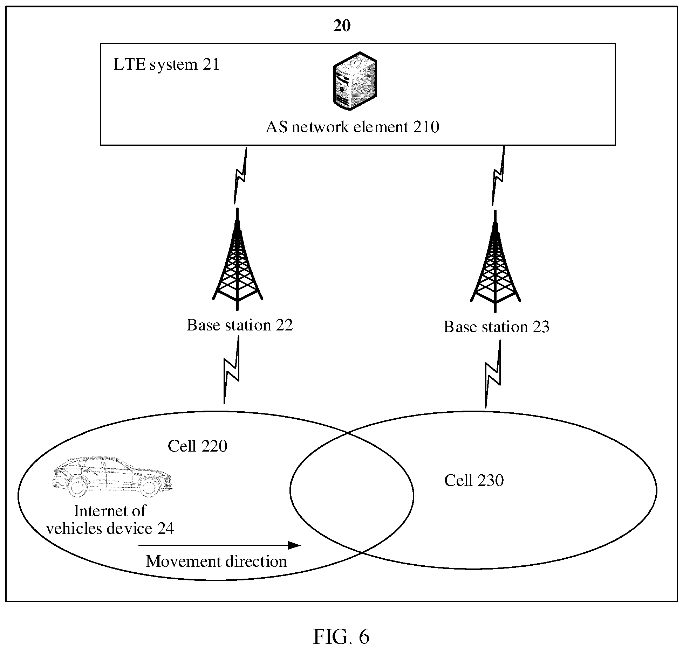

FIG. 6 shows a network architecture 20. In this embodiment, the network architecture 20 includes an LTE system 21, a base station 22, a base station 23, and an internet of vehicles device 24. The base station 22 and the base station 23 access the LTE system 21 that includes an AS network element 210. A signal coverage area of the base station 22 includes a cell 220. A signal coverage area of the base station 22 includes a cell 230. A serving cell of the internet of vehicles device 24 is the cell 220. In the cell 220, the internet of vehicles device 24 can perform wireless communication with the base station 22 and with the AS network element 210. The internet of vehicles device 24 moves towards the cell 230, for example, at 150 km/h in the direction shown in the figure.

The internet of vehicles device 24 supports, for example, cellular vehicle to everything (cellular vehicle to everything, C-V2X).

The AS network element 210 may be responsible for providing a basic service and supplementary services, such as a multimedia conference, converged communications, a short message service gateway, and a standard attendant console. The AS network element may also be referred to as an AS device.

It may be understood that the network architecture 20 shown in FIG. 6 is merely an example for description, and does not constitute a limitation on the network architecture 20. In some other embodiments, the network architecture 20 may further include more or fewer base stations or the like.

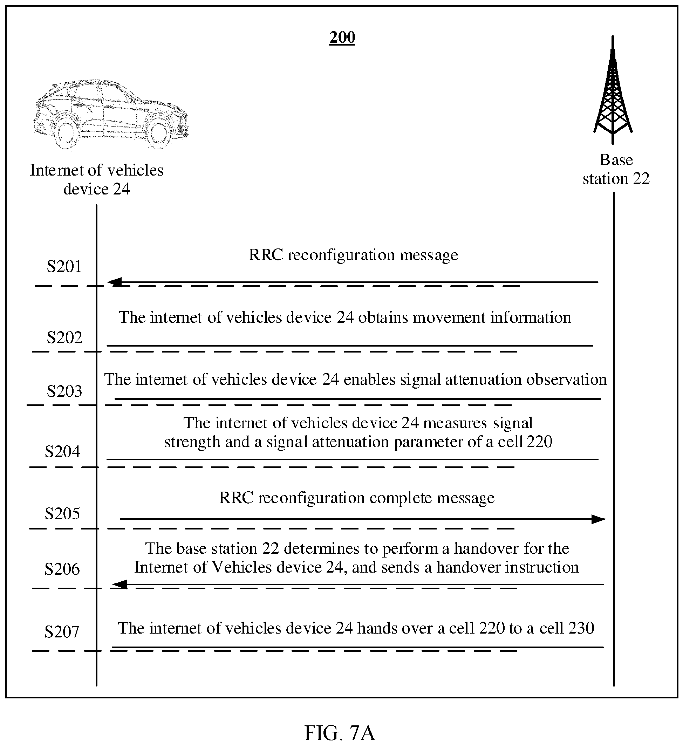

Further, FIG. 7A is a signaling interaction diagram of a cell handover method 200. In the cell handover method 200 (hereinafter referred to as a method 200 for short), a preset threshold and a speed threshold, which can be configured as 120 km/h for example, are configured for the internet of vehicles device 24. The method 200 includes the following steps.

S201: After the internet of vehicles device 24 is attached, the base station 22 sends an RRC reconfiguration message to the Internet of Vehicles device 24.

The RRC reconfiguration message includes information such as measurement report configuration and signal threshold control of a serving cell (that is, the cell 220).

S202: The internet of vehicles device 24 obtains movement information of the Internet of Vehicles device 24.

In this embodiment, the movement information includes a movement speed 150 km/h and a movement direction.

S203: The internet of vehicles device 24 determines that 150 km/h is greater than the preset threshold and generates signal attenuation observation.

In this embodiment, the preset threshold is, for example, 80 km/h

S204: After determining that 150 km/h is greater than a speed threshold 120 km/h, the internet of vehicles device 24 measures signal strength and a signal attenuation parameter in the cell 220.

The internet of vehicles device 24 chooses to report an A2 handover event. In this embodiment, the A2 handover event is, for example, that the signal strength in the cell 220 is less than -80 dBm, and a cell of the internet of vehicles device 24 is handed over from the cell 220 to the cell 230. Based on this, the internet of vehicles device 24 may measure only signal strength in the cell 220. The signal strength in the cell 220 is, for example, -75 dBm.

The internet of vehicles device 24 determines the signal attenuation parameter by using a formula Signal attenuation $\text{parameter} = \frac{df(t)}{dt}$ . The signal attenuation parameter is, for example, 20 dB.

S205: The internet of vehicles device 24 sends an RRC reconfiguration complete message to the base station 22.

The RRC reconfiguration complete message includes signal strength -75 dBm and the signal attenuation parameter 20 dB.

S206: The base station 22 determines, based on the signal strength -75 dBm and the signal attenuation parameter 20 dB, to perform a handover for the internet of vehicles device 24, and then sends a handover instruction to the Internet of Vehicles device 24.

An attenuation threshold is, for example, 15 dB. The handover instruction includes a base station identifier of the base station 23, a port identifier of the cell 230, and the like.

For example, the base station 22 determines that the signal strength -75 dBm is greater than -80 dBm, and therefore the handover condition of the A2 event is not met. Then, the base station 22 determines that the signal attenuation parameter 20 dB is greater than the attenuation threshold 15 dB, generates a handover instruction, and sends the handover instruction to the internet of vehicles device 24.

S207: The internet of vehicles device 24 hands over the cell 220 to the cell 230.

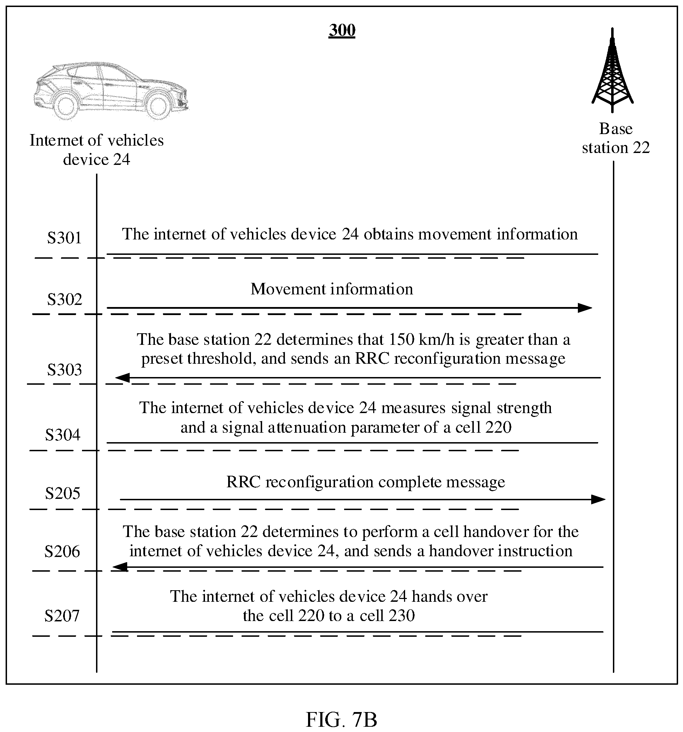

FIG. 7B is a signaling interaction diagram of a cell handover method 300. In the cell handover method 300 (hereinafter referred to as a method 300 for short), for example, a preset threshold and a signal strength threshold -70 dBm are configured for the base station 22. The method 300 includes the following steps.

S301: The internet of vehicles device 24 obtains movement information of the Internet of Vehicles device 24.

S302: The internet of vehicles device 24 sends the movement information to the base station 22.

S303: The base station 22 determines that 150 km/h is greater than the preset threshold, and sends an RRC reconfiguration message to the internet of vehicles device 24.

In this embodiment, the RRC reconfiguration message includes signal attenuation observation instruction and a signal strength threshold -70 dBm.

S304: The internet of vehicles device 24 measures signal strength and a signal attenuation parameter of the cell 220.

The signal strength -75 dBm of the cell 220 is less than the signal strength threshold -70 dBm. Therefore, the internet of vehicles device 24 measures the signal attenuation parameter of the cell 220.

Then, the internet of vehicles device 24 interacts with the base station 22 by performing the same steps from S205 to S207 shown in FIG. 7A. Details are not described herein again.

It should be noted that the embodiment shown in FIG. 7B is intended to describe a signaling interaction process in an implementation scenario different from that in FIG. 7A. Based on this, an example of a technical feature in FIG. 7A may still be used in the embodiment shown in FIG. 7B. For example, the signal attenuation parameter in FIG. 7A is 20 dB, and the signal attenuation parameter in FIG. 7B is also 20 dB. The same rule applies to other parameters, and these parameters are not described again in FIG. 7B.

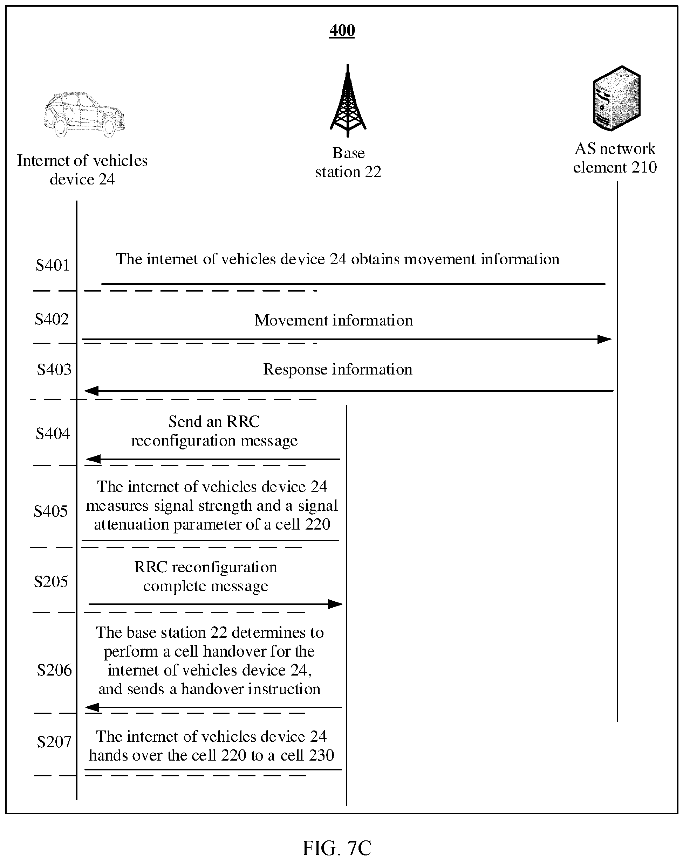

FIG. 7C is a signaling interaction diagram of a cell handover method 400. In the cell handover method 400 (hereinafter referred to as a method 400 for short), for example, a preset threshold, a speed threshold, and a signal strength threshold are configured for the AS network element 210. The method 400 includes the following steps.

S401: The internet of vehicles device 24 obtains movement information of the Internet of Vehicles device 24.

S402: The internet of vehicles device 24 sends the movement information to the AS network element 210.

In this embodiment, the internet of vehicles device 24 may send the movement information to the AS network element 210 by using a CAM

S403: The AS network element 210 determines that 150 km/h is greater than the preset threshold, and sends a response message of the CAM to the internet of vehicles device 24.

The response message includes signal attenuation observation instruction, the speed threshold, and the signal strength threshold.

S404: The base station 22 sends an RRC reconfiguration message to the internet of vehicles device 24.

S405: After determining that 150 km/h is greater than the speed threshold 120 km/h, the internet of vehicles device 24 measures signal strength and a signal attenuation parameter in the cell 220.

Then, the internet of vehicles device 24 interacts with the base station 22 by performing the same steps from S205 to S207 shown in FIG. 7A. Details are not described herein again.

It should be noted that the embodiment shown in FIG. 7C is intended to describe a signaling interaction process in an implementation scenario different from that in FIG. 7A. Based on this, an example of a technical feature in FIG. 7A may still be used in the embodiment shown in FIG. 7C. For example, the signal attenuation parameter in FIG. 7A is 20 dB, and the signal attenuation parameter in FIG. 7C is also 20 dB. The same rule applies to other parameters, and these parameters are not described again in FIG. 7C.

In some other embodiments, information exchanged between the internet of vehicles device 24 and the AS network element 210 in FIG. 7C may alternatively be transparently transmitted by using the base station 22. Details are not described herein again.

It may be understood that the cell handover methods shown in FIG. 7A to FIG. 7C are merely examples for description, and do not constitute a limitation on the cell handover method in this application. In some other embodiments, a network element that performs information exchange in a cell handover method may be different from that in the foregoing embodiments. In addition, thresholds and the like involved in the cell handover method may be configured to other values. This is not limited herein.

In conclusion, according to the cell handover method in this application, when the movement speed of the terminal is greater than the preset threshold, the terminal not only measures the signal strength of the cell, but also measures the signal attenuation parameter of the serving cell. After this, the terminal reports the measured signal strength and signal attenuation parameter to the network side device. Then, the network side device determines, based on the signal strength and the signal attenuation parameter of the serving cell of the terminal, whether the cell handover is to be performed by the terminal. In this way, in a process of determining whether to perform the cell handover for the terminal device, the network side device can use signal attenuation caused by the movement speed of the terminal as one of parameters, so that the cell handover for the terminal can be performed accurately and in time. This ensures successful running of a communication function of the terminal.

The foregoing embodiments provided in this application describe the solutions of the cell handover method provided in the embodiments of this application from perspectives of each devices and interaction between the devices. The terminal and the base station, or the terminal and the core network element, for example, include a corresponding hardware structure and/or software module for performing each function. A person skilled in the art should be easily aware that, in combination with the examples of units and algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, the terminal may implement the foregoing corresponding functions by using function modules. The terminal may include, for example, a processing module and a transceiver module. In an embodiment, the terminal may be configured to perform the cell handover method performed by the terminal in any embodiment shown in the method 100 and the cell handover method performed by the internet of vehicles device in any embodiment shown in the method 200 to the method 400.

For example, the processing module may be configured to obtain a signal attenuation observation instruction. The processing module may be further configured to detect, in response to the signal attenuation observation instruction, signal strength and a signal attenuation parameter of a first cell, where the signal strength includes signal strength of the first cell which is a serving cell of the terminal, and the signal attenuation parameter indicates a signal attenuation degree in the first cell within a unit time. The transceiver module may be configured to send the signal strength and the signal attenuation parameter to a network side device, where signal coverage of the network side device includes the first cell. The processing module may be further configured to perform a cell handover, in response to a handover instruction from the network side device, from the first cell to a second cell. The second cell is a neighboring cell of the first cell.

For specific content, refer to descriptions related to the terminal in any embodiment shown in the method 100 and descriptions related to the internet of vehicles device in any embodiment shown in the method 200 to the method 400. Details are not described herein again.

In addition, the network side device may implement the foregoing corresponding functions in by using function modules. The network side device may include, for example, a processing module and a transceiver module. In an embodiment, the network side device may be configured to perform the cell handover method performed by the network side device in any embodiment shown in the method 100 and the cell handover method performed by the base station and the core network element in any embodiment shown in the method 200 to the method 400.

For example, the transceiver module may be configured to receive signal strength and a signal attenuation parameter of a first cell from the terminal, where the signal strength includes signal strength of the first cell, the signal attenuation parameter indicates a signal attenuation degree in the first cell in a unit time, and the first cell is a serving cell of the terminal and is located in a signal coverage area of the network side device. The processing module may be configured to determine, based on the signal strength and the signal attenuation parameter, whether the cell handover is to be performed by the terminal. The transceiver module may be further configured to send a handover instruction to the terminal after determining, based on the signal strength and the signal attenuation parameter, that the cell handover is to be performed by the terminal.

For specific content, refer to descriptions related to the network side device in any embodiment shown in the method 100 and descriptions related to the base station and the core network element in any embodiment shown in the method 200 to the method 400. Details are not described herein again.

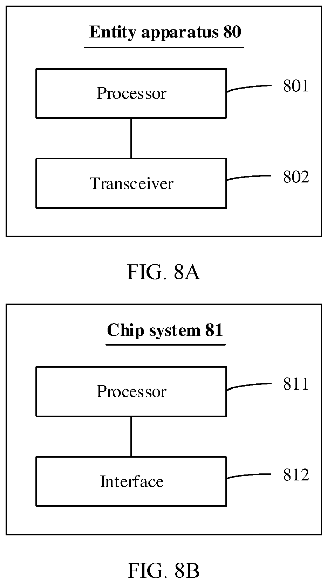

It needs to be understood that division into the foregoing modules is merely logical function division. During actual implementation, all or some of the modules may be integrated into one physical entity, or may be physically separated. For example, the transceiver module of the terminal may be implemented by a transceiver, and the processing module of the terminal may be implemented by a processor. The transceiver module of the network side device may be implemented by a transceiver, and the processing module of the network side device may be implemented by a processor. Based on this, the embodiments of this application separately provide an entity apparatus for the terminal and the network side device. As shown in FIG. 8A, an entity apparatus 80 provided in this application includes a processor 801 and a transceiver 802.

In some embodiments, when the entity apparatus 80 is applied to the terminal, the transceiver 802 may be configured to receive and send information and instructions between the terminal and the network side device in any embodiment shown in the foregoing method 100 to method 400. The processor 801 may be configured to perform an operation of the terminal other than information receiving and sending and instruction receiving and sending in any embodiment shown in the foregoing method 100 to method 400.

For example, the processor 801 may be configured to obtain a signal attenuation observation instruction and detect, in response to the signal attenuation observation instruction, signal strength and a signal attenuation parameter of a first cell, where the signal strength includes signal strength of the first cell which is a serving cell of the terminal, and the signal attenuation parameter indicates a signal attenuation degree in the first cell within a unit time. The transceiver 802 may be configured to send the signal strength and the signal attenuation parameter to a network side device, where signal coverage of the network side device includes the first cell. The processor 801 may be further configured to perform a cell handover, in response to a handover instruction from the network side device, from the first cell to a second cell. The second cell is a neighboring cell of the first cell.

For specific content, refer to descriptions related to the terminal in any embodiment shown in the method 100 and descriptions related to the internet of vehicles device in any embodiment shown in the method 200 to the method 400. Details are not described herein again.

In some other embodiments, when the entity apparatus 80 is applied to the network side device, the transceiver 802 may be configured to receive and send information and instructions between the network side device and the terminal in any embodiment shown in the foregoing method 100 to method 400. The processor 801 may be configured to perform an operation of the network side device other than information receiving and sending and instruction receiving and sending in any embodiment shown in the foregoing method 100 to method 400.

For example, the transceiver 802 may be configured to receive signal strength and a signal attenuation parameter of a first cell from the terminal, where the signal strength includes signal strength of the first cell, the signal attenuation parameter indicates a signal attenuation degree in the first cell in a unit time, and the first cell is a serving cell of the terminal and is located in a signal coverage area of the network side device. The processor 801 may be configured to determine, based on the signal strength and the signal attenuation parameter, whether a cell handover is to be performed by the terminal. The transceiver 802 may be further configured to send a handover instruction to the terminal after determining, based on the signal strength and the signal attenuation parameter, that the cell handover is to be performed by the terminal.

According to the description of the network side device in the foregoing embodiments, the network side device includes a base station and a core network element. Correspondingly, in a possible implementation, the entity apparatus 80 may be applied to a base station. In this embodiment, the transceiver 802 may be configured to receive and send information and instructions between the base station and the terminal in any embodiment shown in the foregoing method 200 and method 300. The processor 801 may be configured to perform an operation of the base station other than information receiving and sending and instruction receiving and sending in any embodiment shown in the foregoing method 200 and method 300. For specific content, refer to descriptions related to the base station in any embodiment shown in the method 200 and the method 300. Details are not described herein again. In another possible implementation, the entity apparatus 80 may include an entity apparatus applied to a base station and an entity apparatus applied to a core network element. The processor 801 may include, for example, a first processor and a second processor, and the transceiver 802 may include, for example, a first transceiver and a second transceiver. The core network element may include, for example, a first processor and a first transceiver, and the base station may include, for example, a second processor and a second transceiver. In this embodiment, the first transceiver may be configured to receive and send information and instructions between the core network element and the terminal in any embodiment shown in the foregoing method 400. The first processor may be configured to perform an operation of the core network element other than information receiving and sending and instruction receiving and sending in any embodiment shown in the foregoing method 400. The second transceiver may be configured to receive and send information and instructions between the base station and the terminal in any embodiment shown in the foregoing method 400. The second processor may be configured to perform an operation of the base station other than information receiving and sending and instruction receiving and sending in any embodiment shown in the foregoing method 400. For specific content, refer to descriptions related to the base station in any embodiment shown in the method 400. Details are not described herein again.

The foregoing embodiments describe the terminal and the network side device in this application from a perspective of an independent function entity. This application further provides a chip system separately for the terminal and the network side device. A chip system applies to each device chip system to integrate independent function entities of the corresponding device. As shown in FIG. 8B, this application provides a chip system 81. The chip system 81 may include at least one processor 811 and an interface 812. The interface 812 is coupled to the processor 811. The interface 812 is configured to receive code instructions and transmit the code instructions to the processor 811. The processor 811 may run the code instructions to implement a function of a device in an embodiment of this application.

The chip system 81 may include one chip or a chip module including multiple chips. This is not limited in this application.

In specific implementation, an embodiment of this application further provides a computer storage medium separately for the terminal and the network side device. The computer storage medium disposed in any device may store a program. When the program is executed, some or all of the steps in the embodiments of the cell handover method provided in the method 100 to the method 400 may be implemented. A storage medium in any device may be a magnetic disk, an optical disc, a read-only memory (read-only memory, ROM), a random access memory (random access memory, RAM), or the like.

One or more of the foregoing modules or units may be implemented by using software, hardware, or a combination thereof. When any one of the foregoing modules or units is implemented by software, the software exists in a form of computer program instructions, and is stored in a memory. A processor may be configured to execute the program instructions and implement the foregoing method procedure. The processor may include, but is not limited to, at least one of the following types: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on a chip) or an application specific integrated circuit (application specific integrated circuit, ASIC), or may be an independent semiconductor chip. The processor includes a core for executing software instructions to perform operations or processing, and may further include a necessary hardware accelerator, for example, a field programmable gate array (field programmable gate array, FPGA), a PLD (programmable logic device), or a logic circuit that implements a special-purpose logic operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or without software to execute the foregoing method procedure.

When the foregoing modules or units are implemented by using software, the foregoing modules or units may be implemented completely or partially in a form of a computer program product. The computer program product includes one or more computer instructions. When the computer program instructions are loaded and executed on a computer, the procedures or functions according to embodiments of the present invention are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device integrating one or more usable media, such as a server or a data center. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It should be understood that sequence numbers of the foregoing processes do not mean execution sequences in embodiments of this application. The execution sequences of the processes should be determined based on functions and internal logic of the processes, and should not be construed as any limitation on the implementation processes of the embodiments.

The parts in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

**Claims**

1. A cell handover method, comprising:

    obtaining, by a terminal, a signal attenuation observation instruction;
    detecting in response to the signal attenuation observation instruction, by the terminal, signal strength and a signal attenuation parameter of a first cell, wherein the signal strength comprises signal strength of the first cell which is a serving cell of the terminal, and the signal attenuation parameter indicates a signal attenuation degree in the first cell within a unit time;
    sending, by the terminal, the signal strength and the signal attenuation parameter to a network side device, wherein signal coverage of the network side device comprises the first cell; and
    performing a cell handover in response to a handover instruction from the network side device, by the terminal, from the first cell to a second cell, wherein the second cell is a neighboring cell of the first cell.

2. The method according to claim 1, wherein the obtaining, by a terminal, a signal attenuation observation instruction comprises:

    obtaining, by the terminal, movement information of the terminal, wherein the movement information comprises a movement speed and a movement direction of the terminal; and
    if the movement speed is greater than a preset threshold, generating, by the terminal, the signal attenuation observation instruction.

3. The method according to claim 1, wherein the obtaining, by a terminal, a signal attenuation observation instruction comprises:

    obtaining, by the terminal, movement information of the terminal, wherein the movement information comprises a movement speed and a movement direction of the terminal;
    sending, by the terminal, the movement information to the network side device; and
    receiving, by the terminal, the signal attenuation observation instruction from the network side device, wherein the signal attenuation observation instruction is generated by the network side device in response to the movement information.

4. The method according to any one of claims 1 to 3, wherein the detecting in response to the signal attenuation observation instruction, by the terminal, signal strength and a signal attenuation parameter of a first cell comprises:

    reading, by the terminal, a speed threshold from the signal attenuation observation instruction;
    determining, by the terminal, whether a movement speed of the terminal reaches the speed threshold; and
    if the movement speed of the terminal reaches the speed threshold, detecting, by the terminal, the signal attenuation parameter of the first cell.

5. The method according to any one of claims 1 to 3, wherein the detecting in response to the signal attenuation observation instruction, by the terminal, signal strength and a signal attenuation parameter of a first cell comprises:

    reading, by the terminal, a signal strength threshold from the signal attenuation observation instruction;
    determining, by the terminal, whether the signal strength is less than or equal to the signal strength threshold; and

if the signal strength of the first cell is less than or equal to the signal strength threshold, detecting, by the terminal, the signal attenuation parameter of the first cell.

6. The method according to any one of claims 1 to 3, wherein the detecting in response to the signal attenuation observation instruction, by the terminal, signal strength and a signal attenuation parameter of a first cell comprises:

reading, by the terminal, the speed threshold and the signal strength threshold from the signal attenuation observation instruction; and
determining, by the terminal, whether the movement speed of the terminal reaches the speed threshold; and
if the movement speed of the terminal reaches the speed threshold, detecting, by the terminal, the signal attenuation parameter of the first cell; or
if the movement speed of the terminal does not reach the speed threshold, determining, by the terminal, whether the signal strength of the first cell is less than or equal to the signal strength threshold; and
if the signal strength of the first cell is less than or equal to the signal strength threshold, detecting, by the terminal, the signal attenuation parameter of the first cell.

7. The method according to any one of claims 1 to 6, wherein,

the signal attenuation parameter satisfies: Signal attenuation $\mathrm{parameter} = \dfrac{\mathrm{df}(t)}{\mathrm{dt}}$, and f($t$) refers to signal strength of the first cell at a moment t.

8. A cell handover method, comprising:

receiving, by a network side device, signal strength and a signal attenuation parameter of a first cell from a terminal, wherein the signal strength comprises signal strength of the first cell, the signal attenuation parameter indicates a signal attenuation degree in the first cell within a unit time, and the first cell is a serving cell of the terminal and is located in a signal coverage area of the network side device;
determining, by the network side device based on the signal strength and the signal attenuation parameter, whether a cell handover is to be performed by the terminal; and
sending, by the network side device, a handover instruction to the terminal after determining, based on the signal strength and the signal attenuation parameter, that the cell handover is to be performed by the terminal.

9. The method according to claim 8, wherein the determining, by the network side device based on the signal strength and the signal attenuation parameter, whether a cell handover is to be performed by the terminal comprises:

determining, by the network side device, whether the signal strength reaches a handover threshold; and
if the signal strength reaches the handover threshold, determining, by the network side device, that the cell handover is to be performed by the terminal; or
if the signal strength does not reach the handover threshold, determining, by the network side device, whether the signal attenuation parameter is greater than or equal to an attenuation threshold; and
if the signal attenuation parameter is greater than or equal to the attenuation threshold, determining, by the network side device, that the cell handover is to be performed by the terminal.

10. The method according to claim 8 or 9, wherein before the receiving, by a network side device, signal strength and a signal attenuation parameter of a first cell from a terminal, the method further comprises:

receiving, by the network side device, movement information from the terminal, wherein the movement information comprises a movement speed and a movement direction of the terminal; and
sending, by the network side device, a signal attenuation observation instruction to the terminal after determining that the movement speed is greater than a preset threshold.

11. The method according to claim 10, wherein
the signal attenuation observation instruction comprises at least one of a speed threshold and a signal strength threshold.

12. A terminal, comprising a processor and a memory, wherein
the processor is coupled to the memory, the memory stores program code, and the processor invokes and executes the program code in the memory, so that the terminal performs the method according to any one of claims 1 to 7.

13. A network side device, comprising a processor and a memory, wherein
the processor is coupled to the memory, the memory stores program code, and the processor invokes and executes the program code in the memory, so that the network side device performs the method according to any one of claims 8 to 11.

14. A chip system disposed in a terminal and comprising at least one processor and an interface, wherein the interface is configured to receive code instructions and transmit the code instructions to the at least one processor and the at least one processor runs the code instructions to perform the method performed by the terminal according to any one of claims 1 to 7.

15. A chip system disposed in a network side device and comprising at least one processor and an interface, wherein the interface is configured to receive code instructions and transmit the code instructions to the at least one processor and the at least one processor runs the code instructions to perform the method performed by the network side device according to any one of claims 8 to 11.

<u>**10**</u>

Network side device 11

Core network system

Base station

Cell A

Terminal 12

Area Z

Cell B

FIG. 1

**100**

| Terminal | | Network side device |
|---|---|---|

S101 — The terminal obtains a signal attenuation observation instruction

S102 — The terminal detects signal strength and a signal attenuation parameter of a first cell

S103 — Send the signal strength and the attenuation parameter

S104 — The network side device determines whether a cell handover is to be performed by the terminal

S105 — Send a handover instruction after determining that the cell handover is to be performed by the terminal

S106 — The terminal performs the cell handover the first cell to a second cell

FIG. 2

FIG. 3A

FIG. 3B

Signal
strength
(dBm)

10 ms

Time (ms)

Signal
attenuation
degree

FIG. 4

Signal
strength
(dBm)

Time (ms)

−70

−75

Signal attenuation
parameter

−80

FIG. 5

**20**

LTE system 21

AS network element 210

Base station 22

Base station 23

Cell 220

Cell 230

Internet of
vehicles device 24

Movement direction

FIG. 6

<u>**200**</u>

Internet of vehicles
device 24

Base
station 22

S201     RRC reconfiguration message

S202     The internet of vehicles device 24 obtains movement information

S203     The internet of vehicles device 24 enables signal attenuation observation

S204     The internet of vehicles device 24 measures signal
strength and a signal attenuation parameter of a cell 220

S205     RRC reconfiguration complete message

S206     The base station 22 determines to perform a handover for the
Internet of Vehicles device 24, and sends a handover instruction

S207     The internet of vehicles device 24 hands over a cell 220 to a cell 230

FIG. 7A

**300**

Internet of vehicles
device 24

Base
station 22

S301 | The internet of vehicles device 24 obtains movement information

S302 | Movement information →

S303 | The base station 22 determines that 150 km/h is greater than a preset threshold, and sends an RRC reconfiguration message ←

S304 | The internet of vehicles device 24 measures signal strength and a signal attenuation parameter of a cell 220

S205 | RRC reconfiguration complete message →

S206 | The base station 22 determines to perform a cell handover for the internet of vehicles device 24, and sends a handover instruction ←

S207 | The internet of vehicles device 24 hands over the cell 220 to a cell 230

FIG. 7B

**400**

| | Internet of vehicles device 24 | Base station 22 | AS network element 210 |
|---|---|---|---|

| S401 | The internet of vehicles device 24 obtains movement information |
|---|---|
| S402 | Movement information |
| S403 | Response information |
| S404 | Send an RRC reconfiguration message |
| S405 | The internet of vehicles device 24 measures signal strength and a signal attenuation parameter of a cell 220 |
| S205 | RRC reconfiguration complete message |
| S206 | The base station 22 determines to perform a cell handover for the internet of vehicles device 24, and sends a handover instruction |
| S207 | The internet of vehicles device 24 hands over the cell 220 to a cell 230 |

FIG. 7C

**Entity apparatus 80**

Processor — 801

Transceiver — 802

FIG. 8A

**Chip system 81**

Processor — 811

Interface — 812

FIG. 8B

## INTERNATIONAL SEARCH REPORT

| International application No. |
| --- |
| **PCT/CN2021/070850** |

| A. | CLASSIFICATION OF SUBJECT MATTER |
| --- | --- |
| | H04W 36/32(2009.01)i |

According to International Patent Classification (IPC) or to both national classification and IPC

| B. | FIELDS SEARCHED |
| --- | --- |

Minimum documentation searched (classification system followed by classification symbols)
    H04W

Documentation searched other than minimum documentation to the extent that such documents are included in the fields searched

Electronic data base consulted during the international search (name of data base and, where practicable, search terms used)
    CNABS, CNTXT, VEN, USTXT, EPTXT, WOTXT, 3GPP: 切换, 重选, 换手, 移交, 信号, 信道, 链路, 衰减, 衰落, 变弱, 衰退, 变小, 减小, 降低, 减弱, 变化, 改变, 指数, 参数, 程度, 速度, 快慢, 系数, 因子, 关系, handover, handoff, HO, signal, reduce, diminish, down, weak, decay, fade, attenuation, decrease, lessen, abate, depress, fall, descend, rate, parameter, index, factor, speed, level, degree

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108632875 A (BEIJING SPREADTRUM HIGH-TECH COMMUNICATIONS TECHNOLOGY CO., LTD.) 09 October 2018 (2018-10-09) description paragraphs [0002], [0043]-[0082] | 1-15 |
| X | CN 103501507 A (XIAOMI TECHNOLOGY CO., LTD.) 08 January 2014 (2014-01-08) description, paragraphs [0047]-[0066] | 1-8, 10-15 |
| A | CN 103974292 A (SONY CORPORATION) 06 August 2014 (2014-08-06) description paragraphs [0073]-[0094] | 1-15 |
| A | US 2011059741 A1 (AT&T MOBILITY II LLC) 10 March 2011 (2011-03-10) description, paragraphs [0089]-[0092] | 1-15 |
| A | US 2017034758 A1 (TELEFONAKTIEBOLAGET LM ERICSSON (PUBL)) 02 February 2017 (2017-02-02) description, paragraphs [0034]-[0046] | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 March 2021** | **30 March 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

International application No.

**PCT/CN2021/070850**

| Patent document cited in search report | | | Publication date (day/month/year) | Patent family member(s) | | | Publication date (day/month/year) |
|---|---|---|---|---|---|---|---|
| CN | 108632875 | A | 09 October 2018 | None | | | |
| CN | 103501507 | A | 08 January 2014 | CN | 103501507 | B | 15 August 2017 |
| CN | 103974292 | A | 06 August 2014 | CN | 103974292 | B | 16 October 2018 |
| | | | | WO | 2014114165 | A1 | 31 July 2014 |
| | | | | EP | 2950576 | A1 | 02 December 2015 |
| | | | | JP | 6330821 | B2 | 30 May 2018 |
| | | | | CN | 109257768 | A | 22 January 2019 |
| | | | | ES | 2743920 | T3 | 21 February 2020 |
| | | | | US | 10015705 | B2 | 03 July 2018 |
| | | | | EP | 2950576 | B1 | 28 August 2019 |
| | | | | US | 2015350977 | A1 | 03 December 2015 |
| | | | | JP | 2016511567 | A | 14 April 2016 |
| | | | | EP | 2950576 | A4 | 07 September 2016 |
| | | | | KR | 20150109387 | A | 01 October 2015 |
| US | 2011059741 | A1 | 10 March 2011 | US | 9084171 | B2 | 14 July 2015 |
| US | 2017034758 | A1 | 02 February 2017 | US | 2015045040 | A1 | 12 February 2015 |
| | | | | EP | 3033909 | A1 | 22 June 2016 |
| | | | | US | 9578583 | B2 | 21 February 2017 |
| | | | | WO | 2015022625 | A1 | 19 February 2015 |
| | | | | US | 10555234 | B2 | 04 February 2020 |
| | | | | IN | 201637003713 | A | 01 July 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010188630